# EUROPÄISCHE PATENTSCHRIFT

(11) **EP 0 899 152 B1**
(45) Veröffentlichungstag und Bekanntmachung des Hinweises auf die Patenterteilung: **24.07.2002**
(21) Anmeldenummer: 98115136.8
(22) Anmeldetag: 12.08.1998
(51) Int. Cl.: B60N 2/36, B60N 2/30

(54) **Sitz, insbesondere für eine dritte Sitzreihe eines Kraftfahrzeuges**
Seat, particularly for a third row of an automotive vehicle
Siège, en particulier pour une troisième rangée de sièges d'un véhicule automobile

(30) Priorität: 27.08.1997 DE 19737304
(43) Veröffentlichungstag der Anmeldung: 03.03.1999
(73) Patentinhaber: ADAM OPEL AG, 65423 Rüsselsheim (DE)
(72) Erfinder: Polster, Michael, Dipl.-Ing., 65201 Wiesbaden (DE); Eikemeier, Wolfram, Dipl.-Ing., 55546 Hackenheim (DE)

(56) Entgegenhaltungen:
- EP-A- 0 689 954
- EP-A- 0 745 506
- DE-A- 2 843 667
- US-A- 2 956 837
- US-A- 3 171 682
- US-A- 4 227 736

## Beschreibung

Die Erfindung betrifft einen Sitz, insbesondere für eine dritte Sitzreihe eines Kraftfahrzeuges, welcher im wesentlichen aus einem Sitzteil und einem mit diesem scharnierartig verbundenen Rückenteil besteht und aus einer normalen, zum Aufnehmen eines Insassen geeigneten Gebrauchslage in eine Nichtgebrauchslage überführbar ist, in welcher zumindest das Sitzteil mit seiner Rückfläche eine mit dem Fahrzeugboden etwa ebene Ladefläche bildet.

Ein derartiger Sitz ist aus einer in der DE 44 22 920 A1 beschriebenen Sitzanordnung für einen Lade- bzw. Fahrgastraum bekannt. Dieser Sitz weist ein Sitzteil auf, das gelenkig mit einer etwa in der vertikalen Gebrauchslage am Fahrzeugaufbau verriegelbaren Rückenlehne verbunden ist. Zum Überführen des gesamten Sitzes in eine Nichtgebrauchslage ist dabei eine im vorderen Bereich des Sitzteils angeordnete Querachse vorgesehen, welche in einer etwa waagerechten Ebene nach hinten verschiebbar ausgebildet ist. Zur Aufnahme der verschiebbaren Querachse sind im Bodenbereich Führungsschienen vorgesehen, welche beiderseits des Sitzteils angeordnet und in Längsrichtung des Kraftfahrzeuges ausgerichtet sind. Eine derartige Ausbildung beansprucht jedoch viel Raum im Bodenbereich des Kraftfahrzeuges und ist relativ umständlich hinsichtlich der Überführung des Sitzes in die Nichtgebrauchslage. Außerdem wird durch die Schienenführung des Sitzteils ein höherer Aufwand bei der Sicherung des Sitzes in der Gebrauchslage benötigt.

Ein derartiger Sitz ist auch in US 4 227 736 beschrieben.

Der vorliegenden Erfindung liegt daher die Aufgabe zugrunde, die Sicherheit und die Handhabung eines gattungsgemäßen Sitzes mit einfachen Mitteln zu verbessern, ohne daß mehr Raum im Bodenbereich des Kraftfahrzeuges beansprucht wird.

Diese Aufgabe wird erfindungsgemäß dadurch gelöst, daß zum Überführen des Sitzteils in die Nichtgebrauchslage eine verriegelbare Hebelvorrichtung mit zumindest einem Schwenkhebelpaar vorgesehen ist, welche eine Schwenkung des Sitzteils um etwa 180° nach vorn bei einer gleichzeitigen Verlagerung um einen bestimmten Betrag nach hinten ermöglicht.

Nach einer vorteilhaften Ausführung der Erfindung ist an beiden Längsseiten des Sitzteils jeweils ein Schwenkhebelpaar vorgesehen, dessen einzelne Schwenkhebel jeweils mit einem Ende an einem tragenden Grundkörper des Sitzteils und mit dem anderen Ende an einer mit dem Fahrzeugboden oder dergleichen verbundenen Konsole drehbar befestigt sind. Die Abstände zwischen den jeweiligen Drehgelenken und die Position dieser Drehgelenke am Grundkörper und an der Konsole sind derart ausgewählt und aufeinander abgestimmt, daß beim Schwenken des Sitzes nach vorn (in die Nichtgebrauchslage) ein Wenden des Sitzteils und gleichzeitig dessen Verlagerung nach rückwärts in etwa in die ursprüngliche Position (ähnlich wie in der Gebrauchslage) stattfindet.

Ein weiterer wesentlicher Vorteil der Erfindung besteht darin, daß am Sitz eine Sicherheitsvorrichtung mit einem mit dem Sitz verbundenen Verriegelungsbolzen vorgesehen ist, wobei der Verriegelungsbolzen im Falle eines Frontalunfalls durch Verlagerung nach vorn in eine Ausnehmung an der Konsole gelangt und auf diese Weise ein ungewolltes Schwenken des Sitzes aus der Gebrauchslage nach vorn verhindert.

Die Erfindung läßt zahlreiche Ausführungsformen zu. Zur weiteren Verdeutlichung ihres Grundprinzips ist eine davon in der Zeichnung dargestellt und nachfolgend beschrieben. Die Zeichnung zeigt teilweise schematisch in
- Fig. 1: eine Seitenansicht des erfindungsgemäßen Sitzes, mit einzelnen Schritten bei der Überführung in die Nichtgebrauchslage;
- Fig. 2: eine räumliche Darstellung der miteinander verbundenen Grundkörper von Sitzteil und Rückenteil sowie der Hebelvorrichtung des Sitzes nach Fig. 1;
- Fig. 3: eine vergrößerte räumliche Ansicht eines Ausschnitts **Y** einer Konsole der Hebelvorrichtung nach Fig. 2.

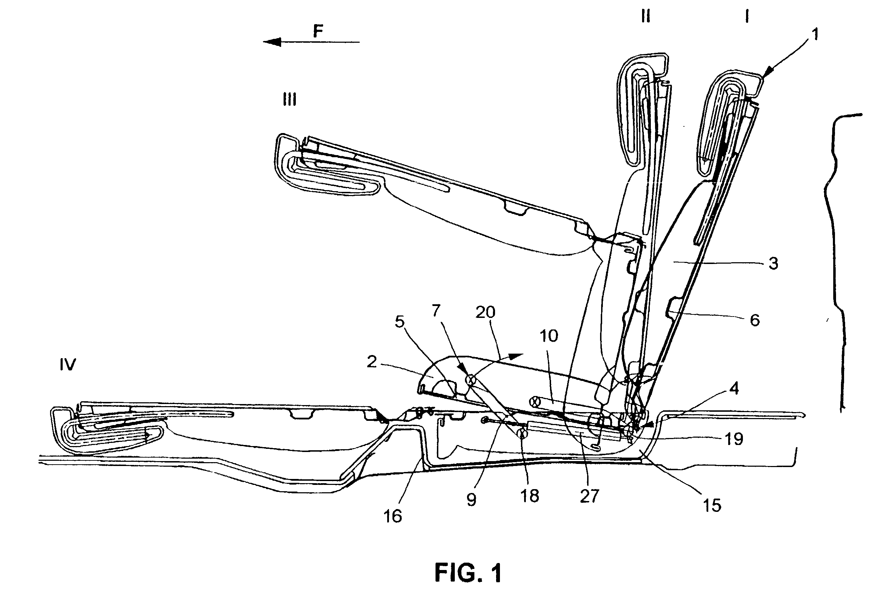

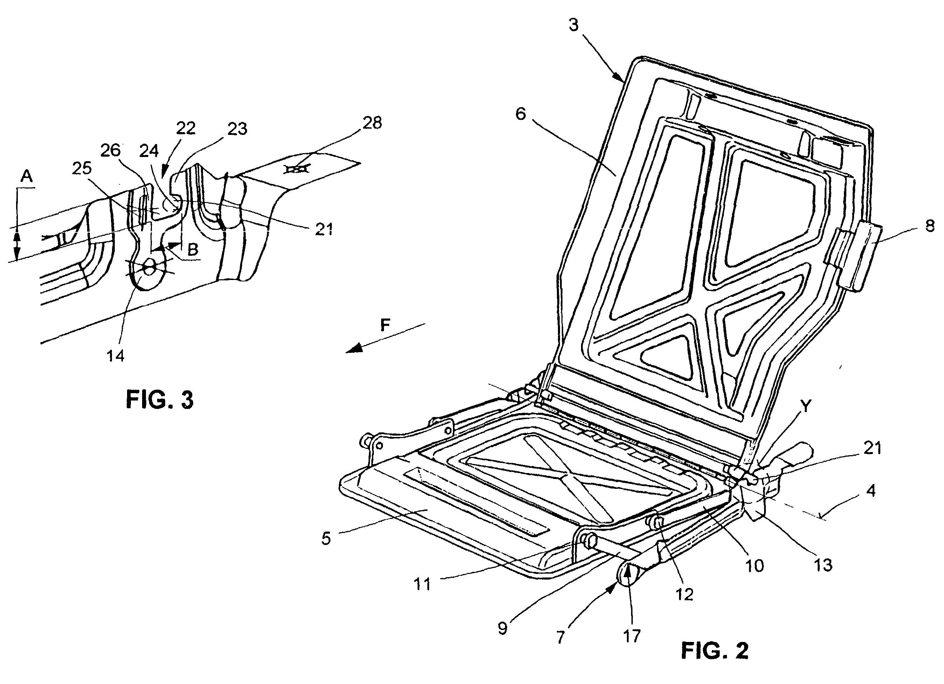

In Fig. 1 ist ein in Fahrtrichtung **F** nach vorn schwenkbarer Sitz 1 dargestellt, welcher im wesentlichen aus einem Sitzteil 2 und einem Rückenteil 3 besteht. Das Sitzteil 2 weist einen tragenden Grundkörper 5 und das Rückenteil 3 einen tragenden Grundkörper 6 auf, wobei die Grundkörper 5, 6 miteinander um eine Achse 4 scharnierartig verbunden sind. In der mit **I** bezeichneten Position befindet sich der Sitz 1 in der Gebrauchslage, in der das Rückenteil 3 über seitliche Verriegelungen 8 (in Fig. 2 dargestellt) mit dem Aufbau verbunden ist.

Zum Überführen des Sitzes 1 in die mit **IV** bezeichnete Nichtgebrauchslage ist eine Hebelvorrichtung 7 vorgesehen, welche an beiden Längsseiten des Sitzteils 2 jeweils ein Schwenkhebelpaar (Schwenkhebel 9, 10) aufweist. Die Schwenkhebel 9, 10 sind, wie in Fig. 2 dargestellt, mit jeweils einem Ende über ein Drehgelenk 11 bzw. 12 mit dem Grundkörper 5 und mit dem jeweiligen anderen Ende über ein nicht dargestelltes Drehgelenk 18 bzw. 19 mit einer Konsole 13 drehbar verbunden. Die Konsole 13 ist dabei als tragendes Formblechteil mit Aufnahmestellen 14 (Fig. 3) zum gelenkigen Verbinden mit den Schwenkhebeln 9, 10 ausgebildet. Die Konsole 13 ist im Bereich einer in Fig. 1 dargestellten Bodenwanne 15 fest mit dem Fahrzeugboden 16 verbunden.

An der Konsole 13 ist, wie aus Fig. 2 ersichtlich, zum Begrenzen der Schwenkbeweglichkeit des vorderen Schwenkhebels 9 ein Anschlag 17 vorgesehen. Der Anschlag 17, welcher durch Verprägung des Blechmaterials der Konsole 13 gebildet ist, stützt den vorderen Schwenkhebel 9 und somit auch das Sitzteil 2 in der normalen Gebrauchslage ab.

Die Abstände zwischen den jeweiligen Drehgelenken 11, 12, 18, 19 und die Positionierung der Drehgelenke 11, 12, 18, 19 jeweils am Grundkörper 5 und an der Konsole 13 sind derart ausgewählt und aufeinander kinematisch abgestimmt, daß beim Schwenken des in Fig. 1 dargestellten Sitzes 1 nach vorn in die Nichtgebrauchslage **IV** ein Schwenken des Sitzteils 2 um 180° und gleichzeitig dessen Verlagerung nach rückwärts in etwa in die ursprüngliche Position (ähnlich wie in der Gebrauchslage **I**) stattfindet. Bei dieser Überführung des Sitzes 1 schwenkt der vordere Schwenkhebel 9 gemäß Pfeil 20 in eine etwa horizontale Lage, während der hintere Schwenkhebel 10 um die Achse seines unteren Drehgelenkes 19 bis etwa in die vertikale Stellung (Position **III** des Sitzes 1) und dann wieder zurück in die etwa ursprüngliche Lage schwenkt.

Das Rückenteil 3 ist in der Gebrauchslage **I** an der Konsole 13 verriegelbar ausgebildet. Dazu ist an der Konsole 13 gemäß Fig. 3 eine **L**-förmige Ausnehmung 22 vorgesehen, welche einen etwa vertikalen Abschnitt **A** sowie einen etwa horizontalen Abschnitt **B** aufweist, wobei am horizontalen Abschnitt **B** zur Bildung einer Sperrnase 23 für einen mit dem Grundkörper 6 des Rückenteils 3 verbundenen Verriegelungsbolzen 21 eine entsprechende Hinterschneidung 24 ausgebildet ist. Da der Verriegelungsbolzen 21 in der Gebrauchslage **I** (Fig. 1) des Sitzes 1 die Sperrnase 23 hintergreift, kann der Sitz 1, insbesondere das Sitzteil 2, in dieser Position nicht nach vorn geschwenkt werden.

Zum Überführen des Sitzes 1 in die Nichtgebrauchslage **IV** muß zunächst der Verriegelungsbolzen 21 außer Eingriff mit der Sperrnase 23 gebracht werden. Dazu ist der Verriegelungsbolzen 21 derart parallel und beabstandet zu der Achse 4 der scharnierartigen Verbindung angeordnet, daß beim Schwenken des Rückenteils 3 um die Achse 4 in eine etwa vertikale Position **II** sich gleichzeitig der Verriegelungsbolzen 21 in die entriegelte Stellung im Bereich des Abschnittes **A** (Fig. 3) bewegt. In dieser Position des Verriegelungsbolzens 21 kann das Sitzteil 2 zusammen mit dem Rückenteil 3 durch Schwenkung nach vorn in die Nichtgebrauchslage **IV** überführt werden.

Um im Falle eines Frontalunfalls eine Entriegelung des Sitzes 1 an der Konsole 13 zu vermeiden, ist gemäß Fig. 3 vor der Ausnehmung 22 eine weitere Ausnehmung 25 vorgesehen ist. Diese Ausnehmung 25 ist derart angeordnet, daß zwischen der Ausnehmung 25 und der Ausnehmung 22 ein deformierbarer Steg 26 gebildet wird. Bei einem Frontalunfall wirken Trägheitskräfte auf das Rückenteil 3, welche den Verriegelungsbolzen 21 nach vorn gegen den Steg 26 verschieben. Da der Steg 26 deformierbar ausgebildet ist, gelangt der Verriegelungsbolzen 21 in die Ausnehmung 25. In dieser Position kann sich der Verriegelungsbolzen 21 nicht mehr nach oben bewegen, so daß keine ungewollte Schwenkung des Sitzes 1 nach vorn stattfinden kann.

Die Überführung des Sitzes 1 in die Nichtgebrauchslage **IV** kann, wie in Fig. 1 dargestellt, durch ein Feder-Dämpferelement 27 unterstützt werden. Das Feder-Dämpferelement 27 ist verbunden mit dem Schwenkhebel 10 und einer Lasche bzw. Bohrung an der Konsole 13 im Bereich der jeweiligen unteren Drehgelenke 18, 19. Durch eine sinnfällige Auswahl der Befestigungspunkte des Feder-Dämpferelementes 27 kann sowohl eine komfortable Handhabung des Sitzes 1 als auch eine Dämpfung der unregelmäßigen Bewegungen der einzelnen Sitzteile erreicht werden.

## Patentansprüche

1. Sitz (1) insbesondere für eine dritte Sitzreihe eines Kraftfahrzeuges, welcher im wesentlichen aus einem Sitzteil (2) und einem mit diesem scharnierartig verbundenen Rückenteil (3) besteht und aus einer normalen, zum Aufnehmen eines Insassen geeigneten Gebrauchslage (I) in eine Nichtgebrauchslage (IV) überführbar ist, in welcher zumindest das Sitzteil (2) mit seiner Rückfläche eine mit dem Fahrzeugboden (16) etwa ebene Ladefläche bildet, **dadurch gekennzeichnet, daß** zum Überführen des Sitzteils (2) in die Nichtgebrauchslage (**IV**) eine verriegelbare Hebelvorrichtung (7) mit zumindest einem Schwenkhebelpaar (9, 10) vorgesehen ist, welche eine Schwenkung des Sitzteils (2) um etwa 180° nach vorn bei einer gleichzeitigen Verlagerung um einen bestimmten Betrag nach hinten ermöglicht.

2. Sitz nach Anspruch 1, **dadurch gekennzeichnet, daß** an beiden Längsseiten des Sitzteils (2) jeweils ein Schwenkhebelpaar (9, 10) vorgesehen ist, dessen einzelne Schwenkhebel (9, 10) jeweils mit einem Ende an einem tragenden Grundkörper (5) des Sitzteils (2) und mit dem anderen Ende an einer mit dem Fahrzeugboden (16) oder dergleichen verbundenen Konsole (13) drehbar befestigt sind.

3. Sitz nach Anspruch 1 oder 2, **dadurch gekennzeichnet, daß** an der Hebelvorrichtung (7) bzw. an der Konsole (13) eine Sicherheitsvorrichtung (25, 26) vorgesehen ist, welche im Falle eines Frontalunfalls eine ungewollte Schwenkung zumindest des Sitzteils (2) aus der Gebrauchslage (**I**) nach vorn verhindert.

4. Sitz nach einem der Ansprüche 1 bis 3, **dadurch gekennzeichnet, daß** zumindest ein Schwenkhebel (9) in der Gebrauchslage (**I**) des Sitzteils (2) gegen einen Anschlag (17) der Konsole (13) anliegt.

5. Sitz nach Anspruch 4, **dadurch gekennzeichnet, daß** der Anschlag (17) zum Begrenzen der Schwenkbewegung des - in Fahrtrichtung (**F**) gesehen - vorderen Schwenkhebels (9) nach vorn vorgesehen ist.

6. Sitz nach einem der Ansprüche 2 bis 5, **dadurch gekennzeichnet, daß** am Grundkörper (5) des Sitzteils (2) bzw. einem Grundkörper (6) des Rückenteils (3) zumindest ein quer zur Fahrtrichtung (**F**) ausgerichteter Verriegelungsbolzen (21) vorgesehen ist, welcher beim Abstützen bzw. Verriegeln zumindest des Sitzteils (2) in der Gebrauchslage (**I**) mit einer an der Konsole (13) vorgesehenen Sperrnase (23) zusammenwirkt.

7. Sitz nach Anspruch 6, **dadurch gekennzeichnet, daß** die Verriegelungsbolzen (21) an beiden Seiten des Grundkörpers (6) des Rückenteils (3) im Bereich der scharnierartigen Verbindung (4) mit dem Sitzteil (2) angeordnet sind.

8. Sitz nach einem der Ansprüche 2 bis 7, **dadurch gekennzeichnet, daß** an der Konsole (13) zum Bilden der Sperrnase (23) eine - quer zur Fahrtrichtung (**F**) gesehen - **L**-förmige Ausnehmung (22) mit einem etwa vertikalen (**A**) und einem etwa horizontalen Abschnitt (**B**) vorgesehen ist, wobei der horizontale Abschnitt (**B**) mit einer auf die Abmessungen des Verriegelungsbolzens (21) abgestimmten Hinterschneidung (24) ausgestattet ist.

9. Sitz nach einem der Ansprüche 6 bis 8, **dadurch gekennzeichnet, daß** zumindest ein am Grundkörper (6) des Rückenteils (3) angeordneter Verriegelungsbolzen (21) in der Gebrauchslage (**I**) des Rückenteils (3) die Sperrnase (23) der Konsole (13) hintergreift.

10. Sitz nach einem der Ansprüche 6 bis 9, **dadurch gekennzeichnet, daß** die Sicherheitsvorrichtung eine, derart an der Konsole angeordnete Ausnehmung (25) aufweist, daß zwischen dieser Ausnehmung (25) und dem Abschnitt (**A**) der **L**-förmigen Ausnehmung (22) ein deformierbarer Steg (26) gebildet wird.

11. Sitz nach einem der Ansprüche 6 bis 10, **dadurch gekennzeichnet, daß** der Verriegelungsbolzen (21) derart parallel und beabstandet zu der scharnierartigen Verbindung (4) angeordnet ist, daß durch Schwenken des Rückenteils (3) um die Achse (4) der scharnierartigen Verbindung um einen bestimmten Winkel nach vorn der Verriegelungsbolzen (21) außer Eingriff mit der Sperrnase (23) gelangt.

12. Sitz nach einem der Ansprüche 2 bis 11, **dadurch gekennzeichnet, daß** die Konsole (13) als tragendes Formblechteil mit Bohrungen (28) zum Befestigen am Fahrzeugboden (16) sowie Aufnahmestellen (14) zum gelenkigen Verbinden mit den Schwenkhebeln (9, 10) ausgebildet: ist.

13. Sitz nach einem der Ansprüche 2 bis 12, **dadurch gekennzeichnet, daß** ein Schwenkhebel (10) zumindest eines Schwenkhebelpaars zur komfortablen Handhabung des Sitzes (1) bei der Überführung zumindest in die Gebrauchslage (**I**) durch ein Feder- und/ oder Dämpferelement (27) mit der Konsole (13) verbunden ist.

## Claims

1. Seat (1), in particular for a third seat row of a motor vehicle, which essentially consists of a seat portion (2) and a back portion (3) connected thereto in hinge fashion and can be transferred from a normal working position (I) suitable for receiving a passenger to a non-working position (IV) in which at least the seat portion (3) with its rear surface forms a loading surface approximately level with the vehicle floor (16), **characterised in that** for transfer of the seat portion (2) to the non-working position (IV) there is provided a lockable lever device (7) with at least one pair of pivot levers (9, 10) which allows forward pivoting of the seat portion (2) through approximately 180° with simultaneous rearward displacement by a given amount.

2. Seat according to claim 1, **characterised in that** on each of the two longitudinal sides of the seat portion (2) is provided a pair of pivot levers (9, 10) of which the individual pivot levers (9, 10) are each rotatably attached by one end to a supporting main body (5) of the seat portion (2) and by the other end to a bracket (13) connected to the vehicle floor (16) or the like.

3. Seat according to claim 1 or 2, **characterised in that** on the lever device (7) or on the bracket (13) is provided a safety device (25, 26) which in case of a head-on accident prevents unwanted forward pivoting of at least the seat portion (2) out of the working position (I).

4. Seat according to any of claims 1 to 3, **characterised in that** at least one pivot lever (9) abuts against a stop (17) of the bracket (13) in the working position (I) of the seat portion (2).

5. Seat according to claim 4, **characterised in that** the stop (17) is provided for limiting the forward pivot movement of the front pivot lever (9) as seen in the direction of travel (F).

6. Seat according to any of claims 2 to 5, **characterised in that** on the main body (5) of the seat portion (2) or on a main body (6) of the back portion (3) is provided at least one locking bolt (21) which is oriented transversely to the direction of travel (F) and which, when at least the seat portion (2) is supported or locked in the working position (I), cooperates with a locking lug (23) provided on the bracket (13).

7. Seat according to claim 6, **characterised in that** the locking bolts (21) are arranged on both sides of the main body (6) of the back portion (3) in the region of the hinge-like connection (4) to the seat portion (2).

8. Seat according to any of claims 2 to 7, **characterised in that** on the bracket (13) for forming the locking lug (23) is provided an L-shaped recess (22) as seen transversely to the direction of travel (F), with an approximately vertical (A) and an approximately horizontal section (B), wherein the horizontal section (B) is provided with an undercut portion (24) adapted to the dimensions of the locking bolt (21).

9. Seat according to any of claims 6 to 8, **characterised in that** at least one locking bolt (21) arranged on the main body (6) of the back portion (3) engages behind the locking lug (23) of the bracket (13) in the working position (I) of the back portion (3).

10. Seat according to any of claims 6 to 9, **characterised in that** the safety device comprises a recess (25) arranged on the bracket in such a way that between this recess (25) and the section (A) of the L-shaped recess (22) is formed a deformable web (26).

11. Seat according to any of claims 6 to 10, **characterised in that** the locking bolt (21) is arranged parallel to and spaced apart from the hinge-like connection (4) in such a way that, by forward pivoting of the back portion (3) about the axis (4) of the hinge-like connection through a given angle, the locking bolt (21) becomes disengaged from the locking lug (23).

12. Seat according to any of claims 2 to 11, **characterised in that** the bracket (13) is constructed as a supporting shaped metal portion with bores (28) for attachment to the vehicle floor (16) as well as receiving points (14) for pivotable connection to the pivot levers (9, 10).

13. Seat according to any of claims 2 to 12, **characterised in that** one pivot lever (10) of at least one pair of pivot levers is connected to the bracket (13) by a spring and/or damper element (27) for comfortable handling of the seat (1) during transfer at least to the working position (I).

## Revendications

1. Siège (1) en particulier pour une troisième rangée de sièges d'un véhicule automobile, comprenant essentiellement une partie siège (2) et une partie dossier (3), qui est liée la première de manière articulée et peut être amenée d'une position d'utilisation (I) normale, adaptée pour recevoir un passager, dans une position de non-utilisation (IV), dans laquelle au moins la partie siège (2) forme avec sa face arrière une surface de chargement sensiblement plane avec le plancher de véhicule (16), **caractérisé en ce que** pour amener la partie siège (2) dans sa position de non-utilisation (IV), il est prévu un système de biellettes (7) verrouillable avec au moins une paire de biellettes (9, 10), qui permettent un pivotement de la partie siège (2) d'environ 180° vers l'avant avec un déplacement simultané d'une certaine valeur vers l'arrière.

2. Siège selon la revendication 1, **caractérisé en ce qu'**il est prévu sur les deux grands côtés de la partie siège (2), une paire de biellettes (9, 10) dont les différentes biellettes (9, 10) sont fixées avec possibilité de rotation chacune par une extrémité à un corps de base (5) de la partie siège (2) et par l'autre extrémité à une console (13) liée au plancher de véhicule (16) ou similaire.

3. Siège selon la revendication 1 ou 2, **caractérisé en ce qu'**il est prévu sur le système de biellettes (7) un dispositif de sécurité (25, 26) qui dans le cas d'une collision frontale empêche un pivotement intempestif d'au moins la partie siège (2) vers l'avant, hors de la position d'utilisation (I).

4. Siège selon une des revendications 1 à 3, **caractérisé en ce qu'**au moins une biellette (9), dans la position d'utilisation (I) de la partie siège (2), est en appui sur une butée (17) de la console (13).

5. Siège selon la revendication 4, **caractérisé en ce que** la butée (17) est prévue pour limiter le mouvement de pivotement vers l'avant de la biellette (9) antérieure - vu dans la direction de déplacement (F).

6. Siège selon une des revendications 2 à 5, **caractérisé en ce qu'**il est prévu sur le corps de base (5) de la partie siège (2) ou sur un corps de base (6) de la partie dossier (3), au moins une tige de verrouillage (21) orientée transversalement à la direction de déplacement (F) qui, pour l'appui ou le verrouillage d'au moins la partie siège (2) dans la position d'utilisation (I), coopère avec un talon de verrouillage (23) prévue sur la console (13).

7. Siège selon la revendication 6, **caractérisé en ce que** les tiges de verrouillage (21) sont disposées de deux côtés du corps de base (6) de la partie dossier (3), dans la région de la liaison de type charnière avec la partie siège (2).

8. Siège selon une des revendications 2 à 7, **caractérisé en ce qu'**il est prévu sur la console (13), pour former le talon de verrouillage (23), une échancrure (22) en forme de L - vu transversalement à la direction de déplacement (F) - avec une portion (A) sensiblement verticale et une portion (B) sensiblement horizontale, la portion (B) horizontale comportant une contre-dépouille (24) adaptée aux dimensions de la tige de verrouillage (21).

9. Siège selon une des revendications 6 à 8, **caractérisé en ce qu'**au moins une tige de verrouillage (21) disposée sur le corps de base (6) de la partie siège (3), dans la position d'utilisation (I) de la partie dossier (3), s'engage derrière le talon de verrouillage (23) de la console (13).

10. Siège selon une des revendications 6 à 9, **caractérisé en ce que** le dispositif de sécurité comprend une échancrure (25), qui est disposée sur la console de manière telle que soit formée une barrette (26) déformable entre ladite échancrure (25) et la portion (A) de l'échancrure en forme de L (22).

11. Siège selon une des revendications 6 à 10, **caractérisé en ce que** la tige de verrouillage (21) est disposée parallèlement à et à distance de la liaison de type charnière (4), de telle sorte que par pivotement d'un certain angle vers l'avant de la partie dossier (3) autour de l'axe (4) de la liaison de type charnière, la tige de verrouillage ((21) vienne hors de prise d'avec le talon de verrouillage (23).

12. Siège selon une des revendications 2 à 11, **caractérisé en ce que** la console (13) est conformée en pièce d'emboutissage en tôle avec des trous (28) pour sa fixation au plancher de véhicule (16) et des points de montage (14) pour la liaison articulée avec les biellettes (9, 10).

13. Siège selon une des revendications 2 à 11, **caractérisé en ce qu'**une biellette (10) d'au moins une paire de biellettes, pour une manipulation confortable du siège (1) lorsqu'on l'amène au moins dans sa position d'utilisation (I), est reliée à la console (13) par un élément élastique et/ou un élément amortisseur.
